# EUROPEAN PATENT SPECIFICATION

(11) **EP 3 106 651 B1**
(45) Date of publication and mention of the grant of the patent: **23.08.2017**
(21) Application number: 16169198.5
(22) Date of filing: 11.05.2016
(51) Int. Cl.: B60W 50/06, B60W 10/06, B60W 10/115, B60W 30/18, B60W 10/184, F02D 41/02, F02D 41/16, F02D 31/00

(54) **CONTROL APPARATUS FOR VEHICLE AND CONTROL METHOD FOR VEHICLE**
STEUERUNGSVORRICHTUNG FÜR EIN FAHRZEUG UND STEUERUNGSVERFAHREN FÜR EIN FAHRZEUG
APPAREIL ET PROCÉDÉ DE CONTRÔLE POUR VÉHICULE

(30) Priority: 12.05.2015 JP 2015097115
(43) Date of publication of application: 21.12.2016
(73) Proprietor: Toyota Jidosha Kabushiki Kaisha, Toyota-shi, Aichi 471-8571 (JP)
(72) Inventor: YAGIHASHI, Nobuo, Aichi-ken, Aichi 471-8571 (JP); INOUE, Masahiro, Aichi-ken, Aichi 471-8571 (JP); TSUTSUJI, Shunichi, Aichi-ken, Aichi 470-0334 (JP)
(74) Representative: D Young & Co LLP

(56) References cited:
- WO-A1-96/00844
- US-A- 4 961 146

## Description

### BACKGROUND OF THE INVENTION

### 1. Field of the Invention

The invention relates to a control apparatus for a vehicle and a control method for a vehicle for controlling a vehicle capable of traveling by a creep phenomenon.

### 2. Description of Related Art

An automatic transmission vehicle (hereinafter referred to as an AT vehicle) includes an engine (an internal combustion engine), an stepped automatic transmission, and a torque converter. The stepped automatic transmission can automatically shift a gear in a stepwise manner. The torque converter is connected to the engine and the stepped automatic transmission. Power that is generated in the engine is transmitted to the stepped automatic transmission via the torque converter, and is then further transmitted from the stepped automatic transmission to each wheel (drive wheel) via a driveshaft and the like.

In the AT vehicle of this type, the torque converter keeps such a state as to be able to transmit the power while the engine rotates without depression of an accelerator pedal, such as in an idling state (an idle operation state). Accordingly, in the case where a foot is released from a brake pedal when the engine is in the idling state and a shift lever is in a travel range, for example, a creep phenomenon occurs where the vehicle travels at a low speed despite a fact that the accelerator pedal is not depressed.

There is a case where the wheels are locked and slip when the brake pedal is depressed hard while the vehicle travels on a low µ road that is a road with a low friction coefficient, such as a snowy, icy, or muddy road. Accordingly, in order to stop the vehicle that travels on the low µ road while stabilizing the behavior of the vehicle, it is preferred that the brake pedal is slightly depressed to apply a small braking force to the wheels.

In a case of the AT vehicle that can generate the creep phenomenon, a so-called push-out phenomenon possibly occurs by a creep force when it is attempted to stop the vehicle on the low µ road while applying the small braking force to the wheels. That is, when the small braking force is applied to each of the wheels in order to stop the traveling AT vehicle, the wheels, to which the power generated in the engine is not transmitted, (that is, non-drive wheels) stop rotating. However, the power of the engine is still transmitted to the drive wheels, to which the power is transmitted, through the torque converter. Accordingly, the "push-out phenomenon" where the vehicle travels despite a fact that the braking force is applied to the wheels possibly occurs by the creep force that is generated by the torque converter and the drive wheels, when the braking force on the drive wheels is small.

In an FR vehicle in which the engine is provided in a front portion of the vehicle, a rear portion of the vehicle is lighter than the front portion. For this reason, the braking force of a brake on a rear wheel side is set smaller than the braking force of a brake on a front wheel side. Thus, the push-out phenomenon is especially likely to occur to the FR vehicle.

For example, when a heating request is made immediately after a start or during a cold start of the engine, in order to increase a speed of the engine (that is, a speed per unit time) to fulfill this heating request, a target idle speed of the engine is set high. Accordingly, the push-out phenomenon is also likely to occur when the heating request is made immediately after the start of the engine or the like.

A technique for enabling a smooth starting operation of the AT vehicle on the low µ road is disclosed in Japanese Patent Application Publication No. 8-218910 (JP 8-218910 A).

A travel mode of this AT vehicle can be switched to a "low µ road mode (a holding mode)" suited for a travel on the low µ road. That is, this AT vehicle is started while executing "second gear holding control", in which gears of the stepped automatic transmission is automatically switched to a second gear and held at second gear, when a driver releases his/her foot from the brake pedal in a state where the AT vehicle is in the low µ road mode and is stopped. Furthermore, at this time, the AT vehicle executes "idle speed reduction control" for reducing an idle speed of the engine. Even when the idle speed has to be set at a high value on the basis of the heating request, said heating request is ignored, and this idle speed reduction control is executed.

In the cases where the stepped automatic transmission is in first gear with large torque, the idle speed is increased, and the AT vehicle performs the starting operation on the low µ road, the wheels of this AT vehicle may slip, or this AT vehicle may be stuck. However, according to JP 8-218910 A, the AT vehicle can smoothly be started on the low µ road without causing wheel slip or without being stuck.

It is considered that, if the second gear holding control in JP 8-218910 A and the idle speed reduction control are executed during braking of the AT vehicle, a possibility of occurrence of the push-out phenomenon can be reduced.

### SUMMARY OF THE INVENTION

In the AT vehicle capable of executing start and stop control (SS control) for automatically stopping and restarting the engine, the stepped automatic transmission shifts to first gear due to a structure of the vehicle when the engine is stopped. Accordingly, in the case where second gear is automatically shifted to first gear when the vehicle travels on the low µ road while the braking force is applied to the wheels, the push-out phenomenon may occurs.

There is a case where, after the stepped automatic transmission is shifted from second gear to first gear in association with a vehicle speed reduction during braking, a low µ road determination is made in a vehicle that does not execute the SS control. In this case, after certain length of time elapses, the stepped automatic transmission is shifed from first gear to second gear and is held at second gear (the second gear holding control is executed). However, a period in which the vehicle travels at first gear exists in a period before the stepped automatic transmission is shifted from first gear to second gear. At this time, the creep force is large because the stepped automatic transmission is in first gear. Thus, the push-out phenomenon possibly occurs.

The invention provides a control apparatus for a vehicle and a control method for a vehicle capable of stopping a vehicle while reducing a possibility of occurrence of a push-out phenomenon even in the case where first gear is used when the vehicle that can generate a creep phenomenon travels on a low µ road and capable of increasing a target idle speed while minimizing a sense of discomfort received by a driver when an operation using first gear is switched to that using second gear.

A first aspect of the invention provides a control apparatus for a vehicle. The vehicle includes an internal combustion engine, a drive wheel, a non-drive wheel, a stepped automatic transmission, a coupling device, and a braking device. The stepped automatic transmission is configured to transmit power generated by the internal combustion engine to the drive wheel. The coupling device is interposed between the internal combustion engine and the stepped automatic transmission. The coupling device is configured to transmit the power generated by the internal combustion engine to the stepped automatic transmission such that the vehicle makes a creep travel. The braking device is configured to apply a braking force to the drive wheel and the non-drive wheel. The control apparatus includes an electronic control unit configured to: control the internal combustion engine and the stepped automatic transmission; execute a target idle speed control for controlling the internal combustion engine such that an engine speed matches a target idle speed when an operation state of the internal combustion engine is an idle operation state; set an upper limit value of the target idle speed when a specified low µ road control condition is established while the braking device acts on the vehicle, such that the upper limit value when the stepped automatic transmission is in first gear is smaller than the upper limit value when the stepped automatic transmission is in a second gear ; and set a change amount per unit time of the upper limit value such that the change amount per unit time when the stepped automatic transmission shifts from first gear to second gear is smaller than the change amount per unit time when the stepped automatic transmission shifts from second gear to first gear.

According to the above configuration, low µ road target idle speed control is executed as one type of low µ road control in the case where it is determined that the specified low µ road control condition is established while the braking device acts on the vehicle. That is, when the the stepped automatic transmission gear device is in first gear, the upper limit value of the target idle speed of the internal combustion engine is set to a lower numerical value (for example, 760 rpm) than that at a time of second gear. Accordingly, torque of the wheel that receives rotary torque is reduced. Thus, a possibility of occurrence of a push-out phenomenon can be reduced.

Furthermore, in the case where the low µ road target idle speed control is executed, the upper limit value of the target idle speed at a time when second gear is used is increased to be larger than that in the case of first gear. Accordingly, in comparison with the case of first gear, a heating request can easily be handled. In addition, the upper limit value of the target idle speed of the internal combustion engine is gradually increased when a state where first gear is used is switched to a state where second gear is used during the low µ road target idle speed control. Thus, in comparison with a case where the upper limit value of the target idle speed is rapidly increased, a possibility that a driver receives a sense of discomfort can be reduced.

In the control apparatus, the electronic control unit may be configured to execute second gear holding control for shifting the stepped automatic transmission to second gear and holding in second gear when the low µ road control condition is established during braking of the vehicle by the braking device when the stepped automatic transmission is in first gear and a specified second gear holding condition is established.

According to the above configuration, the push-out phenomenon can further reliably be prevented.

In the control apparatus, the electronic control unit may be configured to execute N control when the vehicle is stopped, the N control is a control for shifting the stepped automatic transmission to neutral where power cannot be transmitted, and the electronic control unit may be configured to set the upper limit value of the target idle speed when executing the N control such that the upper limit value when the stepped automatic transmission is in a state where power cannot be transmitted is higher than the upper limit value when the stepped automatic transmission is in a state as to be able to transmit the power.

According to the above configuration, in comparison with a case where the transmission gear device is in such a state as to be able to transmit the power, the target idle speed of the internal combustion engine is increased. Thus, the heating request can be handled.

In the control apparatus, the electronic control unit may be configured to execute SS control, the SS control is a control for stopping an operation of the internal combustion engine when a speed of the vehicle becomes at most equal to a specified speed, and the electronic control unit may be configured to shift the stepped automatic transmission to first gear when the SS control is executed.

According to the above configuration, fuel economy of the internal combustion engine can be improved, and an emission amount of exhaust gas can be reduced. Furthermore, when the SS control is executed, there is a case where the stepped automatic transmission is shifted to first gear due to a structure of the vehicle. However, as described above, because the upper limit value of the target idle speed during use of first gear is lowered, the possibility of the occurrence of the push-out phenomenon can be reduced immediately before the SS control is executed.

A second aspect of the invention provides a control method for a vehicle. The vehicle includes an internal combustion engine, a drive wheel, a non-drive wheel, a stepped automatic transmission, a coupling device, and a braking device. The stepped automatic transmission is configured to transmit power generated by the internal combustion engine to the drive wheel. The coupling device is interposed between the internal combustion engine and the stepped automatic transmission. The coupling device is configured to transmit the power generated by the internal combustion engine to the stepped automatic transmission such that the vehicle makes a creep travel. The braking device is configured to apply a braking force to the drive wheel and the non-drive wheel. The control method includes: controlling the internal combustion engine and the stepped automatic transmission; executing a target idle speed control for controlling the internal combustion engine such that an engine speed matches a target idle speed when an operation state of the internal combustion engine is an idle operation state; setting an upper limit value of the target idle speed when a specified low µ road control condition is established while the braking device acts on the vehicle, such that the upper limit value when the stepped automatic transmission is in first gear is smaller than the upper limit value when the stepped automatic transmission is in second gear; and setteing a change amount per unit time of the upper limit value such that the change amount per unit time when the stepped automatic transmission shifts from first gear to second gear is smaller than the change amount per unit time when the stepped automatic transmission shifts from second gear to first gear.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic configuration diagram of a vehicle in which a control apparatus for a vehicle according to an embodiment of the invention is mounted;
FIG. 2 is a timing chart in the case where the control apparatus for the vehicle is applied to a vehicle that executes SS control;
FIG. 3 is a timing chart in the case where the control apparatus for the vehicle is applied to a vehicle that executes N control;
FIG. 4A and FIG. 4B are a flowchart that shows processing of entire control by the control apparatus for the vehicle; and
FIG. 5 is a flowchart that shows determination processing of a precondition and a flowchart that shows determination processing of an execution condition.

### DETAILED DESCRIPTION OF EMBODIMENTS

A description will hereinafter be made on a vehicle 10 in which a control apparatus for a vehicle according to an embodiment of the invention is mounted with reference to the drawings.

The vehicle 10 is an AT vehicle and includes a right and left pair of front wheels (non-drive wheels) 11 and a right and left pair of rear wheels (drive wheels) 12. The vehicle 10 further includes an internal combustion engine (an engine) 15, a torque converter 16 as a coupling device, and a stepped automatic transmission 17.

The internal combustion engine 15 that is disposed in a front portion of the vehicle 10 is an internal combustion engine in which air-fuel mixture of fuel (for example, gasoline) that is injected from an injector (not shown) and air is combusted in a combustion chamber of a cylinder. A crankshaft (not shown) is rotated when a piston in the cylinder vertically reciprocates in conjunction with combustion.

The torque converter 16 that is located at the rear of the internal combustion engine 15 is a fluid-type torque converter with a lock-up clutch. The torque converter 16 is connected to the crankshaft of the internal combustion engine 15 and an input shaft of the stepped automatic transmission 17. The torque converter 16 transmits rotary torque (engine power) that is generated in the crankshaft of the internal combustion engine 15 to the stepped automatic transmission 17. Furthermore, the torque converter 16 can amplify the rotary torque that is transmitted from the crankshaft. As it has been well known, the fluid-type torque converter is always in such a state as to be able to transmit the power. Accordingly, the vehicle 10 generates a creek phenomenon in the cases where the internal combustion engine 15 is operated, the stepped automatic transmission 17 is in a state other than neutral, and a large braking force is not applied to the front wheels 11 and the rear wheels 12.

The stepped automatic transmission 17 that is located at the rear of the torque converter 16 transmits the rotary torque that is input from the torque converter 16 to a propeller shaft 18. The rotary torque that is transmitted to the propeller shaft 18 is further transmitted to the right and left rear wheels 12 via a differential gear 19a, a driveshaft 19b, and the like. That is, the vehicle 10 of this embodiment is a front-engine, rear-wheel-drive (FR) vehicle.

When receiving pressure from hydraulic oil that flows through an unillustrated hydraulic circuit, the stepped automatic transmission 17 changes meshing states of plural gear members that constitute an internal gear mechanism and thereby sets any of plural types of gears. A pump that is operated in conjunction with rotation of the internal combustion engine 15 is connected to this hydraulic circuit, and the hydraulic oil is supplied to the hydraulic circuit by the pressure that is generated by this pump. The stepped automatic transmission 17 includes gears for a forward travel and for a reverse travel. More specifically, the gears for the forward travel include first gear, second gear, third gear, fourth gear, and fifth gear at different gear ratios. The gear ratio is reduced in an order of first gear, second gear, third gear, fourth gear, and fifth gear. Meanwhile, the gears for the reverse travel includes reverse gear only. In this example, the gear ratio of reverse gear is larger than that of first gear. In this embodiment, first gear, second gear, and reverse gear are included in "low-speed gears". Third gear, fourth gear, and fifth gear are also referred to as "high-speed gears" as a matter of convenience.

A portion in the hydraulic circuit through which the hydraulic oil flows is determined by opening/closing states of plural electromagnetic switching valves that are provided in the hydraulic circuit. In addition, gear of the stepped automatic transmission 17 is determined by the portion of the hydraulic circuit through which the hydraulic oil flows. Furthermore, when the hydraulic oil flows through a particular portion of the hydraulic circuit, the stepped automatic transmission 17 is in neutral or a parking state (that is, a state where the gear mechanism of the stepped automatic transmission 17 is locked).

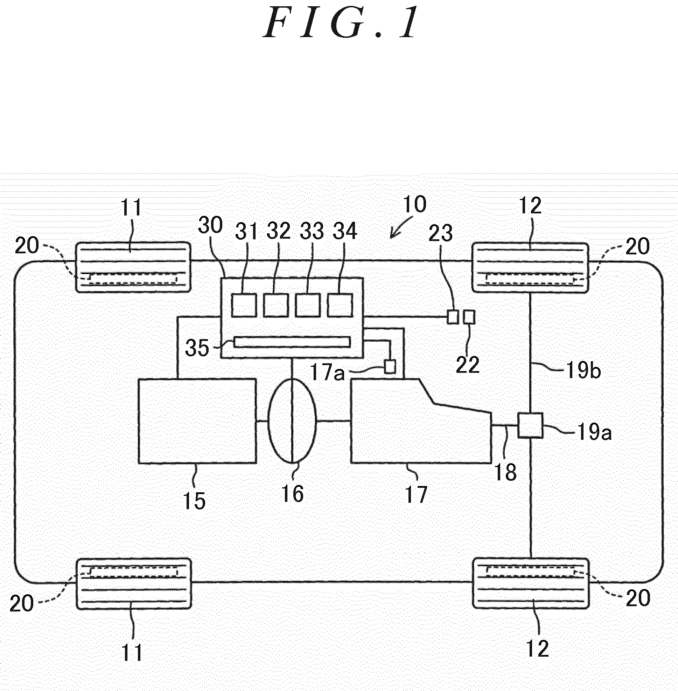

As shown in FIG. 1, a gear type identification sensor 17a (gear identifying means or a gear sensor) for detecting switching states of the electromagnetic switching valves is provided in the vicinity of the stepped automatic transmission 17. The gear type identification sensor 17a detects the switching state of each of the electromagnetic switching valves and detects which gears in which the stepped automatic transmission 17 on the basis of a detection result.

A brake device 20 (a braking device) is provided in the vicinity of each of the front wheels 11 and each of the rear wheels 12. Each of the brake devices 20 is linked to a brake actuator (not shown) that is operated by hydraulic pressure. This brake actuator is operated when a driver depresses a movable brake pedal 22 that is provided in the vehicle as will be described below. When the brake actuator is operated, each of the brake devices 20 applies the braking force to the corresponding front wheel 11 or rear wheel 12. As a depression amount of the brake pedal 22 is increased, the braking force that is applied from each of the brake device 20 to the front wheel 11 or the rear wheel 12 is increased. The vehicle 10 includes a proportioning valve (P valve), which is not shown, to adjust the braking force that is applied to each of the wheels such that the braking force on the front wheel 11 becomes larger than the braking force on the rear wheel 12.

An electric control unit (a control section, a controller) 30 (hereinafter referred to as an ECU) is a microcomputer that includes a CPU 31, a ROM 32, a RAM 33, a backup RAM 34, an interface 35 including an AD converter, and the like that are connected by a bus. The ROM 32 stores a program executed by the CPU 31, a map (a lookup table), and data such as constants in advance. The RAM 33 temporarily retains data by following instructions of the CPU 31. The backup RAM 34 stores data at a time when the internal combustion engine 15 is in an operation state, and further retains the stored data while the operation of the internal combustion engine 15 is stopped.

This ECU 30 is connected to the gear type identification sensor 17a and a brake switch 23 as well as to a brake pedal sensor, an airflow meter, an accelerator operation amount sensor, a throttle opening degree sensor, an engine speed sensor, a shift lever position switch, a coolant temperature sensor, and the like, which are not shown.

The brake switch 23 generates an ON signal at a time when the brake pedal 22 is operated, and generates an OFF signal at a time when an operation of the brake pedal 22 is canceled. These signals are transmitted to the ECU 30. The brake pedal sensor that is provided in the vicinity of the brake pedal 22 is a sensor for detecting a position of the brake pedal 22, that is, the depression amount thereof. When the driver depresses the brake pedal 22, brake hydraulic pressure is increased, and the brake actuator is actuated. Then, each of the brake devices 20 applies the braking force that corresponds to the depression amount of the brake pedal 22 to the front wheel 11 or the rear wheel 12.

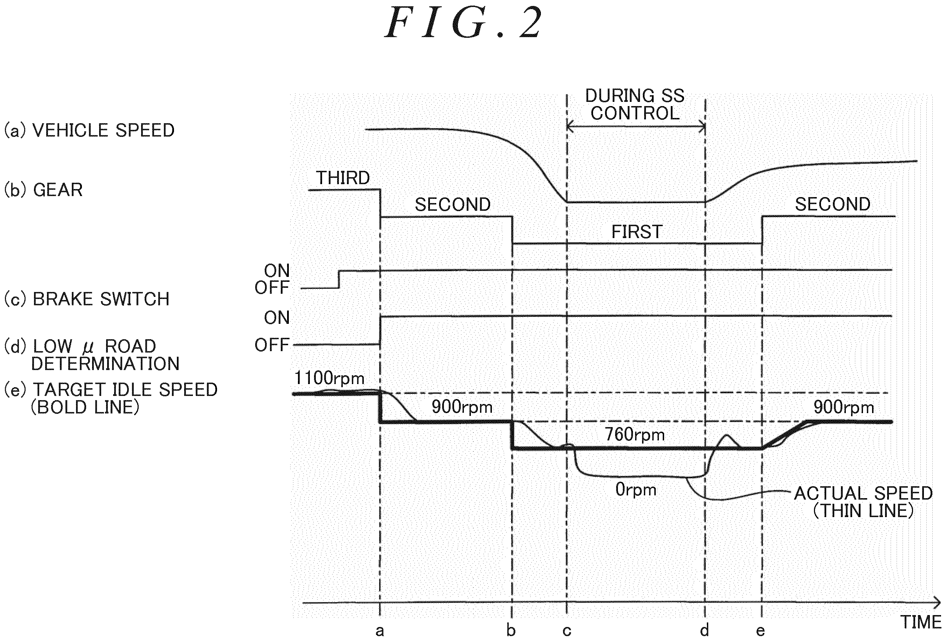

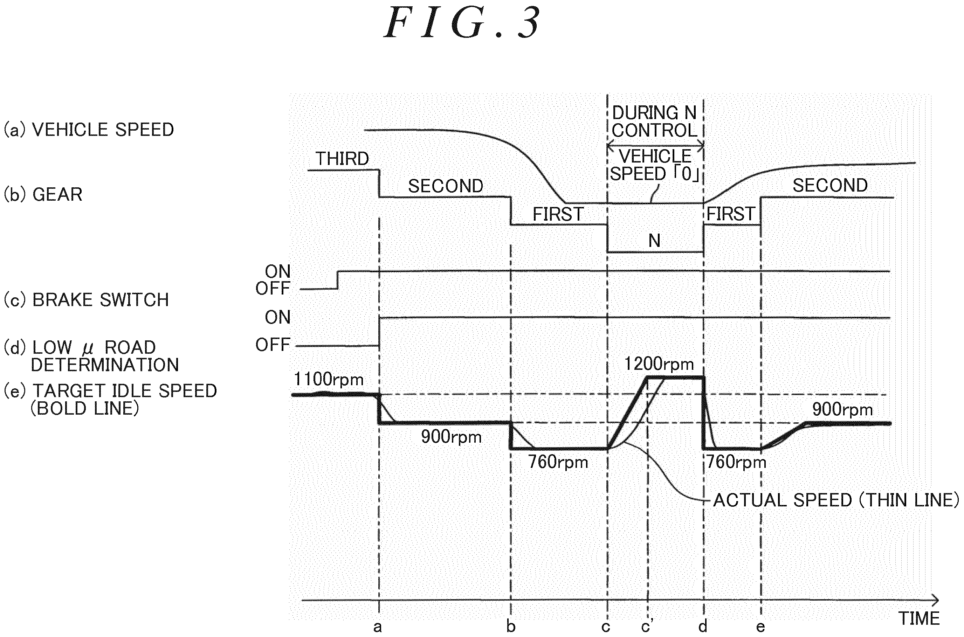

The ECU 30 of the vehicle 10 determines that the vehicle 10 is traveling on a low µ road when it is determined that "the brake switch 23 is ON" and "a rotational speed difference between the front wheel 11 and the rear wheel 12 that are located on a right side or a left side is at least equal to a specified value". Such a determination is hereinafter referred to as a "low µ road determination". As indicated by an "ON" state in FIG. 2 and FIG. 3, once the "low µ road determination" is made, a state where the "low µ road determination" is made is held until the brake switch 23 is turned OFF. The "low µ road determination" is canceled when the brake switch 23 is turned OFF.

Under a condition that the following three determinations are made, the ECU 30 of the vehicle 10 executes "low µ road control": the "low µ road determination", a "determination that a shift lever is in a D range and the stepped automatic transmission 17 is in low-speed gear", and a "determination that further another specified condition is satisfied". That these three determinations are made will hereinafter be described as that a "low µ road control condition is established". The low µ road control refers to a control method suited for a stopping operation and a starting operation of the vehicle 10 on the low µ road. The low µ road control is control that includes "low µ road target idle speed control" and "second gear holding control", which will be described below. The above "determination that the further another specified condition is satisfied" is not essential as a condition for executing the low µ road control.

On the other hand, when the ECU 30 determines that any one of the requisites in the low µ road control condition is not satisfied, the ECU 30 executes normal control instead of the low µ road control. The normal control is, that is, control of the vehicle 10 based on control in which the "low µ road target idle speed control" and the "second gear holding control" are not executed. That is, the ECU 30 controls the vehicle 10 while appropriately selecting the low µ road control or the normal control.

The airflow meter (not shown) detects an air amount that is suctioned to the internal combustion engine 15 and transmits a signal indicative of a detection result to the ECU 30. The accelerator operation amount sensor (not shown) is a sensor for detecting a position, that is, a depression amount of an accelerator pedal (not shown) that is provided in the vehicle (an accelerator operation amount). The accelerator operation amount sensor transmits a detection signal indicative of depression amount information to the ECU 30 when the accelerator pedal is depressed. The throttle opening degree sensor (not shown) detects an opening degree of a throttle valve (not shown) that is rotatably provided in an intake duct (not shown) of the internal combustion engine 15 and transmits a signal indicative of a detection result to the ECU 30. An amount of air that is suctioned from the intake duct to the cylinder is adjusted in accordance with the opening degree of the throttle valve.

The engine speed sensor (not shown) detects a rotational speed of the crankshaft of the internal combustion engine 15 and transmits a signal indicative of a detection result to the ECU 30. An input shaft rotational speed sensor (not shown) detects a rotational speed of the input shaft of the stepped automatic transmission 17 and transmits a signal indicative of a detection result to the ECU 30. An output shaft rotational speed sensor (not shown) detects a rotational speed of an output shaft of the stepped automatic transmission 17 (that is, a vehicle speed) and transmits a signal indicative of a detection result to the ECU 30. The ECU 30 recognizes the vehicle speed of the vehicle 10 on the basis the rotational speed of the output shaft.

The coolant temperature sensor (not shown) transmits a signal indicative of a coolant temperature of the internal combustion engine 15 to the ECU 30.

The shift lever position switch (not shown) detects a shift position of the shift lever (not shown) that is provided in the vehicle, and transmits a shift position signal indicative of a detection result to the ECU 30. The shift lever of this embodiment can move to any of the six shift positions that are the D (drive) range, an L (first gear) range, a 2 (second gear) range, an R (reverse) range, a P (parking) range, and an N (neutral) range.

The ECU 30 that has received the shift position signal from the shift lever position switch transmits a control signal to the electromagnetic switching valves in the hydraulic circuit. As a result, a route of the hydraulic oil that flows through the hydraulic circuit is changed, and the stepped automatic transmission 17 that receives hydraulic pressure of the hydraulic oil automatically shifts gears. That is, the stepped automatic transmission 17 shifts to first gear when the shift position is in the L range, and the stepped automatic transmission 17 shifts to second gear when the shift position is in the 2 range. The stepped automatic transmission 17 shifts to reverse gear when the shift position is in the R range. The stepped automatic transmission 17 shifts to neutral when the shift position is in the N range, and the stepped automatic transmission 17 is brought into the parking state when the shift position is in the P range.

When the shift position is in the D range, the ECU 30 controls the stepped automatic transmission 17 on the basis of various types of vehicle information. More specifically, the ECU 30 controls the stepped automatic transmission 17 on the basis of the vehicle information transmitted from the brake pedal sensor, the brake switch 23, the accelerator operation amount sensor, the throttle opening degree sensor, the engine speed sensor, the output shaft rotational speed sensor, the coolant temperature sensor, and the like as well as the map, the program, and the like that are stored in the ROM 32.

For example, when the shift lever is positioned in the D range, the ECU 30 selects gear that is considered to be optimum among first to fifth gears on the basis of various types of the vehicle information transmitted to the ECU 30. Then, by transmitting the control signal to the electromagnetic switching valves, the ECU 30 makes the stepped automatic transmission 17 shiftsto selected gear. When the opening degree of the throttle valve is constant, the ECU 30 controls the stepped automatic transmission 17 gradually shifts to the higher-speed gear from first gear to second, third, fourth, and fifth gear as the vehicle speed is increased.

When the shift lever is positioned in the D range, the L range, the 2 range, or the R range, the stepped automatic transmission 17 is brought into such a state as to be able to transmit the power. On the other hand, when the shift lever is positioned in the N range or the P range, the stepped automatic transmission 17 is brought into such a state as not to be able to transmit the power.

The ECU 30 recognizes gear in which the stepped automatic transmission 17 on the basis of the detection signal that is transmitted from the gear type identification sensor 17a.

The vehicle 10 is divided into the following two vehicle types by control methods that can be executed.

### Type 1: SS control type vehicle

SS control is control in which the ECU 30 temporarily stops the internal combustion engine 15 when the vehicle speed becomes at most equal to a specified speed (for example, zero) during a travel of the vehicle 10 due to actuation of each of the brake devices 20. In the case where the traveling vehicle 10 executes the SS control when the shift lever is positioned in the D range, the stepped automatic transmission 17 forcibly shifts to first gear. In this way, fuel economy of the internal combustion engine 15 can be improved, and an emission amount of exhaust gas can be reduced. When a restart condition is established in this temporarily stopped state, the ECU 30 restarts the internal combustion engine 15. For example, a determination by the ECU 30 that "the depression amount of the brake pedal 22 becomes smaller than a specified amount" based on the signal from the brake pedal sensor can be used as the restart condition. When the restart condition is established, the internal combustion engine 15 is restarted in a state where the stepped automatic transmission 17 is in first gear.

### Type 2: N control type vehicle

N control (neutral control) is control for automatically shifting the stepped automatic transmission 17 to neutral where the power cannot be transmitted in the case where a specified N control condition is established when the shift lever is in the D range. For example, a determination by the ECU 30 that all of three requisites of that "the depression amount of the brake pedal 22 is at least equal to a specified amount", that "the accelerator pedal is not depressed", and that "the vehicle speed is zero" are satisfied can be used as the N control condition. In the case where the vehicle 10 attempts to execute the N control when the shift lever is positioned in the D range, the ECU 30 forcibly shifts the stepped automatic transmission 17 to first gear before execution of the N control. A determination by the ECU 30 that "the depression amount of the brake pedal 22 becomes smaller than the specified amount" can be used as a canceling condition of the N control. When this canceling condition is established, the stepped automatic transmission 17 is shifted from neutral to first gear.

Next, overview of the control method for the vehicle 10 will be described. Main characteristics of the control method in this embodiment are the following three points. A description will hereinafter be made on these three points with reference to FIG. 2 and FIG. 3.

### Characteristic 1: First gear travel control during the low µ road control

The ECU 30 of each of the vehicles 10 of the types 1, 2 in this embodiment executes "target idle speed control". The target idle speed control is control in which the engine speed is changed so as to correspond to a target idle speed in the case where the operation state of the internal combustion engine 15 is an idle operation state (for example, in the cases where the vehicle speed is lower than a specified speed near "0" and the accelerator operation amount that is detected by the accelerator operation amount sensor is "0"). More specifically, when the engine speed is higher than the target idle speed, the ECU 30 reduces the opening degree of the throttle valve and, furthermore, advances ignition timing depending on a situation. In this way, the engine speed is brought close to the target idle speed. On the other hand, when the engine speed is lower than the target idle speed, the ECU 30 increases the opening degree of the throttle valve and, furthermore, delays the ignition timing depending on the situation. In this way, the engine speed is brought close to the target idle speed. Furthermore, the lower the coolant temperature that is detected by the coolant temperature sensor is, the higher the target idle speed is set. The bigger a difference between a requested cabin temperature set by the driver and an atmospheric temperature (that is, is set at a high value when a heating request is made) is, the higher the target idle speed is set. Furthermore, the higher an electric load is, which is not shown, (the higher a requested power generation amount is), the higher the target idle speed is set. For example, as will be described below, the target idle speed is set at 1100 rpm at a time when the heating request is made and the shift lever is in the D range, and is set at 1200 rpm at a time when the heating request is made and either the shift lever is in the N range or the stepped automatic transmission 17 is in neutral.

The ECU 30 of each of the vehicles 10 of the types 1, 2 executes the "low µ road target idle speed control" as one type of the low µ road control when it is determined that a "low µ road control condition" is established. This low µ road target idle speed control is one mode of the "target idle speed control". However, the low µ road target idle speed control has a following characteristic that differs from the normal target idle speed control. More specifically, in the low µ road target idle speed control, the ECU 30 separately sets an upper limit value of the target idle speed of the internal combustion engine 15 in accordance with whether the stepped automatic transmission 17 is in first gear, second gear, or reverse gear. At this time, the ECU 30 recognizes the type of gearsof the stepped automatic transmission 17 on the basis of the detection signal that is transmitted from the gear type identification sensor 17a.

As shown in FIG. 2 and FIG. 3, in the case where the stepped automatic transmission 17 is in second gear when the low µ road control is executed (that is, when the low µ road determination is ON), the ECU 30 sets the upper limit value of the target idle speed at 900 rpm on the basis of the map that is stored in the ROM 32. In addition, in the case where the stepped automatic transmission 17 is first gear, the ECU 30 sets the upper limit value of the target idle speed at 760 rpm on the basis of the map. In the case where the stepped automatic transmission 17 is in reverse gear, the ECU 30 sets said upper limit value at 700 rpm on the basis of the map.

In the case where the braking force is applied to the drive wheels 12 and the non-drive wheels 11 (that is, the wheels) with reducing depression amount of the brake pedal 22 by the driver while the traveling vehicle 10 executes the low µ road target idle speed control, the vehicle 10 is decelerated or stopped (see a period from time prior to time a to time c in FIG. 2 and FIG. 3).

Then, when the stepped automatic transmission 17 shifts to first gear (see time b in FIG. 2 and FIG. 3), the upper limit value of the target idle speed of the internal combustion engine 15 becomes 760 rpm, which is a lower speed than that at second gear, by the low µ road target idle speed control.

In general, in order to stop the vehicle without generating a push-out phenomenon on the low µ road, it is desirable to execute the "second gear holding control" in which the stepped automatic transmission 17 is held in second gear, at which "torque generated in the drive wheel" is smaller than that at first gear, and to reduce the upper limit value of the target idle speed. However, the second gear holding control cannot be executed before the execution of the SS control or the N control in vehicles, such as the vehicle 10 of the types 1, 2, in which the geat of the stepped automatic transmission 17 shifts to first gear before the execution of the SS control or the N control.

Meanwhile, even in the case where the stepped automatic transmission 17 is in first gear during the low µ road determination, the torque of the rear wheel 12, which receives the rotary torque of the internal combustion engine 15, (the torque generated by the drive wheel) is reduced by setting the upper limit value of the target idle speed of the internal combustion engine 15 at the low numerical value (760 rpm). Accordingly, a possibility of occurrence of the push-out phenomenon by a creep force during use of first gear can be reduced.

When the stepped automatic transmission 17 is shifted from second gear to first gear during the low µ road target idle speed control (see the time b in FIG. 2 and FIG. 3), the ECU 30 rapidly reduces the upper limit value of the target idle speed of the internal combustion engine 15 from 900 rpm to 760 rpm. As a result, the target idle speed is rapidly reduced from 900 rpm to 760 rpm.

As shown in FIG. 2 and FIG. 3, the upper limit value of the target idle speed is 1100 rpm at a time when the heating request is transmitted from an air conditioner (not shown) to the ECU 30 in such a situation where the shift lever is in the D range and the internal combustion engine 15 is not sufficiently warmed like the time immediately after the start, for example. That is, the value of 760 rpm as the upper limit value of the target idle speed at first gear during the low µ road target idle speed control is not large enough to fulfill the heating request. Accordingly, in the case where the stepped automatic transmission 17 shifts to first gear during the low µ road target idle speed control, a load request to the internal combustion engine 15, for example, the heating request by the air conditioner cannot be fulfilled. In other words, in this case, prevention of the occurrence of the push-out phenomenon, which is associated with the use of first gear, is prioritized over fulfillment of the heating request to the internal combustion engine 15.

In the case where the low µ road control condition is established in a state of second gear, each of the vehicles 10 of the types 1, 2 executes the low µ road target idle speed control at second gear. However, also in this case, each of the vehicles 10 of the types 1, 2 forcibly shifts the stepped automatic transmission 17 to first gear before executing the SS control or the N control (see the time b in FIG. 2 and FIG. 3).

When the vehicle 10 executes the low µ road target idle speed control in the state where the stepped automatic transmission 17 is in second gear (see a period from the time a to b in FIG. 2 and FIG. 3), the upper limit value of the target idle speed is set at 900 rpm, which is smaller than 1100 rpm, in order to prioritize the prevention of the occurrence of the push-out phenomenon. Because this upper limit value is higher than the upper limit value of the target idle speed in the case of first gear, the heating request can easily be handled in comparison with the case of first gear.

In the cases where the low µ road target idle speed control is executed, the shift lever is positioned in the R range, and thus the stepped automatic transmission 17 shifts to reverse gear, the upper limit value of the target idle speed is set at 700 rpm. In this case, the stepped automatic transmission 17 is not automatically shifted from reverse gear to second gear. Accordingly, the second gear holding control is not executed in the low µ road control at a time when the stepped automatic transmission 17 is in reverse gear.

When the internal combustion engine 15 is sufficiently warmed as in a case where a sufficient time period has elapsed since the start of the internal combustion engine 15, the target idle speed at a time when the heating request is transmitted to the ECU 30 is 600 rpm. Accordingly, in this case, even when the stepped automatic transmission 17 is in any of first gear, second gear, and reverse gear during the low µ road target idle speed control, the heating request can be handled.

### Characteristic 2: Low µ road target idle speed control during the N control or at a time when the shift lever is in the N range

When the vehicle speed of the vehicle 10 of the type 2 becomes 0 (zero) at the time c in FIG. 3, the ECU 30 executes the N control. During the N control, the stepped automatic transmission 17 is in neutral. Accordingly, even when the upper limit value of the target idle speed of the internal combustion engine 15 is set high, the vehicle 10 does not generate the creep phenomenon. Thus, the upper limit value of the target idle speed at this time is set at 1200 rpm by the low µ road target idle speed control, so as to be able to handle the heating request.

Furthermore, a change amount per unit time (that is, a change rate) of the upper limit value of the target idle speed at this time is set smaller than a change amount per unit time of the upper limit value of the target idle speed at a time when the stepped automatic transmission 17 shifts from second gear to first gear at the time b (see the time c to c' in FIG. 3). Just as described, when the upper limit value of the target idle speed of the internal combustion engine 15 is gradually increased, a possibility that the driver receives a sense of discomfort can be reduced in comparison with a case where the upper limit value thereof is significantly and rapidly increased.

Also, in the case where the shift lever is shifted to the N range at any of the time b to e, for example, in each of the vehicles 10 of the types 1, 2, the upper limit value of the target idle speed is set at 1200 rpm for a reason that is similar to the case of the N control. Furthermore, also in this case, the change amount per unit time of the upper limit value of the target idle speed is set lower than the change amount per unit time of the upper limit value of the target idle speed at the time when second gear is switched to first gear at the time b.

### Characteristic 3: the second gear holding control

For example, in the cases where the depression amount of the brake pedal 22 becomes smaller than the specified amount and each of the vehicles 10 of the types 1, 2 thereby cancels the SS control or the N control and is started, these vehicles 10 always set the stepped automatic transmission 17 in first gear before the start. Then, in the cases where the low µ road target idle speed control is executed during the travel using first gear and a specified "second gear holding condition" is established (see time e in FIG. 2 and FIG. 3), the ECU 30 executes the second gear holding control as one type of the low µ road control. That is, the ECU 30 shifts the stepped automatic transmission 17 to second gear and holds the stepped automatic transmission 17 in second gear. Furthermore, with the instruction from the ECU 30, the internal combustion engine 15 sets the upper limit value of the target idle speed to 900 rpm.

For example, that a clutch connection state of the torque converter 16 at a time when first gear is used during the low µ road target idle speed control becomes a specified state can be used as the second gear holding condition. For example, in the SS control type vehicle, in the cases where the internal combustion engine 15 is restarted after the stop and the stepped automatic transmission 17 is shifted from first gear to second gear, the pressure of the above pump, which is driven by the power of the internal combustion engine 15, is used. Then, when the pressure of the pump becomes specified pressure, the stepped automatic transmission 17 is shifted to second gear. Thus, in the case of the SS control type vehicle, that the pressure of the pump becomes the specified pressure can be used as the second gear holding condition.

In the case where each of the vehicles 10 of the types 1, 2 (FIG. 2 and FIG. 3) is started from the stopped state on the low µ road by executing the second gear holding control, just as described, the vehicle 10 can smoothly be started without being accompanied by slip or without being stuck.

Furthermore, in conjunction with the execution of the second gear holding control, the ECU 30 increases the upper limit value of the target idle speed of the internal combustion engine 15 to be higher than that at a time when the stepped automatic transmission 17 is in first gear. Then, the change amount per unit time of the upper limit value of the target idle speed at this time is reduced to be smaller than the change amount per unit time of the upper limit value of the target idle speed at the time when second gear is switched to first gear at the time b (see a period immediately after the time e in FIG. 2 and FIG. 3). When the upper limit value of the target idle speed of the internal combustion engine 15 is gradually increased, just as described, the possibility that the driver receives the sense of discomfort can be reduced in comparison with the case where the upper limit value thereof is significantly and rapidly increased.

Moreover, because the upper limit value of the target idle speed during the second gear holding control becomes higher than that in the case of first gear, the heating request can easily be handled in comparison with the case of first gear.

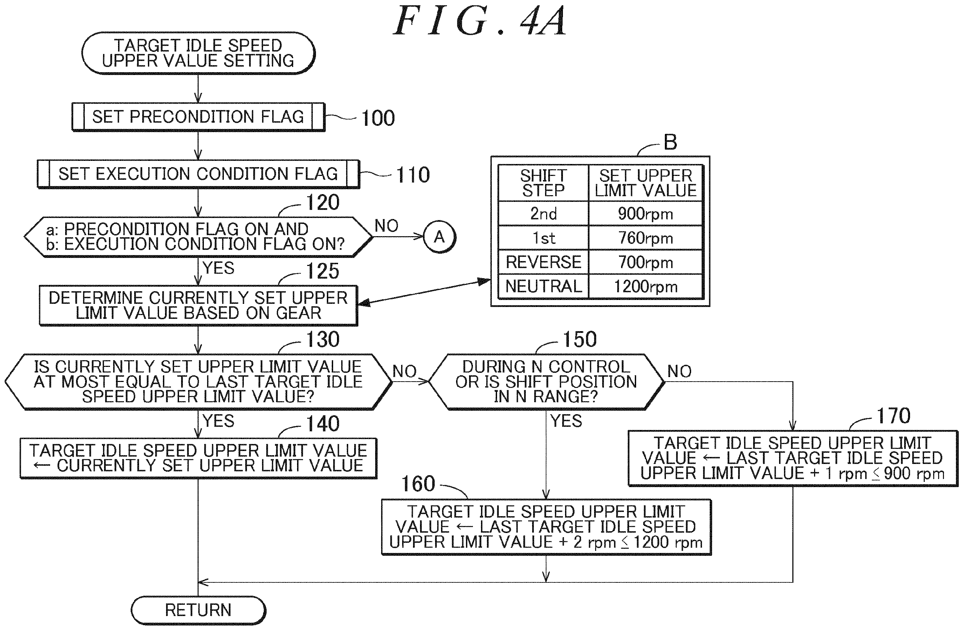

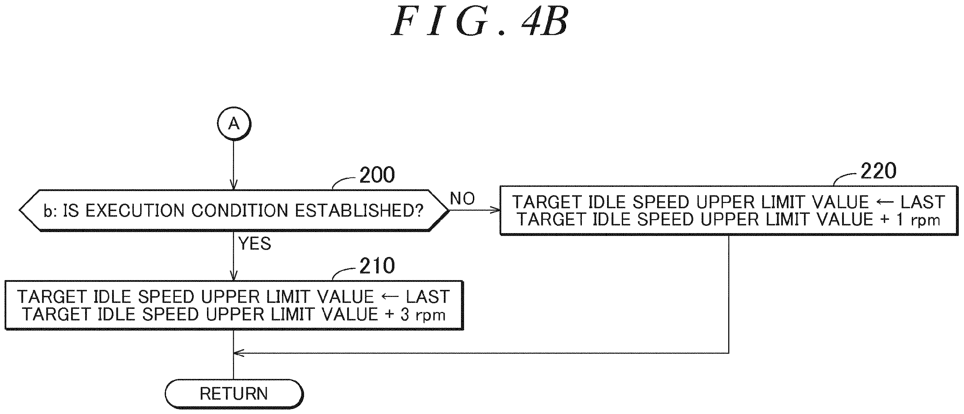

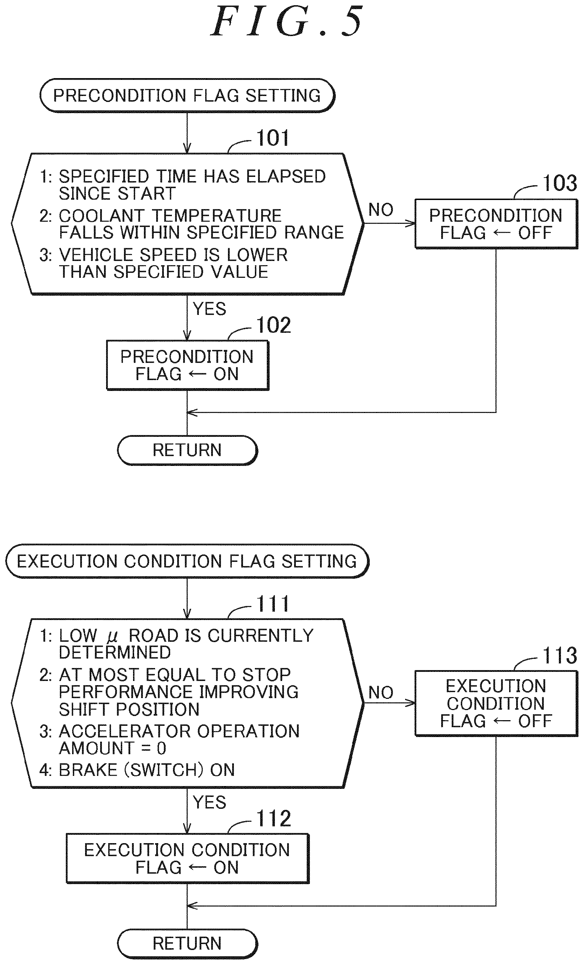

Next, the specific control method of each of the vehicle 10 of the types 1, 2 will be described with reference to flowcharts in FIGS. 4A, 4B and FIG. 5. When an ignition key switch, which is not shown, is operated and the operation of the internal combustion engine 15 is started, the ECU 30 repeatedly executes a routine shown in the flowcharts in FIGS. 4A, 4B and FIG. 5 at specified time intervals (for example, 16 msec).

First, in step 100, the process proceeds to a subroutine of precondition flag setting in FIG. 5, and the ECU 30 determines whether "a: a precondition" is established. That is, the ECU 30 determines in step 101 in FIG. 5 whether all of 1: a specified time period has elapsed since the start of the internal combustion engine 15, 2: the coolant temperature of the internal combustion engine 15 that is measured by the coolant temperature sensor falls within a specified range (for example, at most equal to 60°C), and 3: the vehicle speed of the vehicle 10 is lower than a specified value (for example, 5 to 6 km/h), that is, an extremely low speed are satisfied. If it is determined that all of the conditions are satisfied, the ECU 30 determines that the precondition is established. If determining in step 101 that the precondition is established, the ECU 30 turns ON a precondition flag in step 102. On the other hand, if determined NO in step 101, the process proceeds to step 103, and the ECU 30 turns OFF the precondition flag in step 103.

Next, in step 110 in FIG. 4A, the process proceeds to a subroutine of execution condition flag setting in FIG. 5, and the ECU 30 determines whether "b: an execution condition" is established. That is, upon a determination in step 111 in FIG. 5, the ECU 30 determines whether all of 1: the low µ road determination is being made, 2: gears of the stepped automatic transmission 17 is at most equal to a stop performance improving shift position (in other words, whether the shift position is in the D range and either first gear or second gear, or whether the shift position is in the R range), and 3: the accelerator operation amount that is detected by the accelerator operation amount sensor is zero, and 4: output of the brake switch 23 is ON are satisfied. If it is determined that all of the conditions are satisfied, the ECU 30 determines that the execution condition is established. If it is determined in step 111 that the execution condition is established, the ECU 30 turns ON an execution condition flag in step 112. On the other hand, if determined NO in step 111, the process proceeds to step 113, and the ECU 30 turns OFF the execution condition flag in step 113.

The ECU 30 determines in step 120 whether both of the precondition flag and the execution condition flag are ON. If the ECU 30 determines that both of the flags are ON, that is, if the ECU 30 determines that "the low µ road control condition is established", the process proceeds to step 125. If at least one of the flags is OFF, the process proceeds to step 200.

If YES in step 120, the process proceeds to step 125, and the ECU 30 determines a "currently set upper limit value" on the basis of the current gear in accordance with "the map that is stored in the ROM 32 (the lookup table)" described in a block B in FIG. 4A.

Next, the process proceeds to step 130, and the ECU 30 determines "whether the currently set upper limit value is at most equal to the upper limit value of the last target idle speed".

This step 130 is steps of corresponding to any of 1: the stepped automatic transmission 17 was in second gear in the last determination and the stepped automatic transmission 17 is in first gear in the current determination, 2: the stepped automatic transmission 17 was in second gear in the last determination and the stepped automatic transmission 17 is in second gear in the current determination, 3: the stepped automatic transmission 17 was in first gear in the last determination and the stepped automatic transmission 17 is in first gear in the current determination, or 4: the stepped automatic transmission 17 was in reverse gear in the last determination and the stepped automatic transmission 17 is in reverse gear in the current determination and determining whether neither the N control nor shifting of the shift lever to the N range is executed.

If the determination in step 130 is YES, the process proceeds to step 140, and the ECU 30 sets the upper limit value of the target idle speed to "the currently set upper limit value determined in step 125". Thereafter, the ECU 30 once terminates this routine.

As a result, in the case where the stepped automatic transmission 17 is in second gear, the upper limit value of the target idle speed is set at 900 rpm. Furthermore, in the cases where the stepped automatic transmission 17 is shifted from second gear to first gear and maintained at first gear, the upper limit value of the target idle speed is set at 760 rpm. In the case where the stepped automatic transmission 17 is in reverse gear, the upper limit value of the target idle speed is set at 700 rpm. Accordingly, in the cases where both of a: the precondition and b: the execution condition are established (thus, at least in cases where it is during the low µ road determination and the stepped automatic transmission 17 is in low geat and in cases where the accelerator pedal is not depressed and the brake operation is performed) and the stepped automatic transmission 17 is shifted to gear with a higher shift ratio, the upper limit value of the target idle speed is immediately reduced (see the time b in FIG. 2 and the time b in FIG. 3).

On the other hand, if determined NO in step 130, that is, if the stepped automatic transmission 17 was in first gear in the last determination and the stepped automatic transmission 17 is in second gear in the current determination, or if shifting to neutral by the N control or shifting of the shift lever to the N range is performed, the process proceeds to step 150, and the ECU 30 determines whether 1: the driver shifts the shift lever to the N range in the case where the vehicle type is the type 1, or 2: the vehicle 10 performs shifting to the neutral state by the N control or the driver shifts the shift lever to the N range in the case where the vehicle type is the type 2.

If the ECU 30 determines YES in step 150, the process proceeds to step 160, and the ECU 30 increases the upper limit value of the target idle speed only by 2 rpm from the last upper value (see the time c to c' in FIG. 3). However, the upper limit value of the target idle speed is limited so as not to exceed 1200 rpm as the currently set upper limit value. Just as described, in the case where the N control is currently executed or the shift lever is in the N range, there is no possibility that the rotary torque of the internal combustion engine 15 is transmitted to the rear wheels 12. Accordingly, in order to handle the heating request that requires the high idle speed, the upper limit value of the target idle speed is set to a high value (a higher value than 1100 rpm). However, when the idle speed is rapidly increased in this case, the driver possibly receives the sense of discomfort. Thus, the upper limit value of the target idle speed is increased by a specified speed (2 rpm) every time this routine is executed. In this way, the target idle speed is gradually increased. Thereafter, the ECU 30 once terminates this routine.

On the other hand, if the ECU 30 determines NO in step 150, that is, if the stepped automatic transmission 17 is in second gear (that is, the shift lever is in a position other than the N range) and the N control is not executed, the process proceeds to step 170. Then, in step 170, the ECU 30 increases the upper limit value of the target idle speed only by 1 rpm from the last upper limit value (see time immediately after the time e in FIG. 3). However, the upper limit value of the target idle speed is limited so as not to exceed 900 rpm as the currently set upper limit value. Just as described, in the case where the upper limit value of the target idle speed is gradually increased after the stepped automatic transmission 17 is shifted from first gear to second gear, the target idle speed is gradually increased. Thus, the possibility that the driver receives the sense of discomfort can be reduced as described above, and the possibility that the push-out phenomenon occurs can also be reduced.

On the other hand, if the ECU 30 determines NO in step 120, that is, if the ECU 30 determines that "the low µ road control condition is not established", the process proceeds to step 200. Then, the ECU 30 determines in step 200 whether "b: the execution condition" is established.

If the ECU 30 determines YES in step 200, the internal combustion engine 15 is controlled on the basis of the normal control. For example, in the case where the ECU 30 cancels the low µ road determination due to the operation of the accelerator pedal or the brake pedal by the driver, the ECU 30 determines YES in step 200, and the process proceeds to step 210.

In step 210, the ECU 30 increases the upper limit value of the target idle speed only by 3 rpm from the last upper limit value. As in this case, in the case where the low µ road determination is canceled due to an action based on such driver's intention that "the accelerator pedal is depressed" or "the foot is released from the brake pedal 22", for example, the upper limit value of the target idle speed is increased at a relatively early stage, and, in this way, the target idle speed is also increased at the relatively early stage. It is because the driver does not receive the sense of discomfort in this case even when the target idle speed is increased at a fast pace in order to handle the heating request. Furthermore, in this case, the upper limit value of the target idle speed of the internal combustion engine 15 is allowed to be increased to a conceivable maximum value of the speed of the internal combustion engine 15.

On the other hand, if the ECU 30 determines NO in step 200, that is, if "b: the execution condition" is not established, the internal combustion engine 15 is controlled as follows. For example, in the case where the coolant temperature of the internal combustion engine 15 is high, "b: the execution condition" is not established, and the process proceeds to step 220.

In step 220, the ECU 30 increases the upper limit value of the target idle speed only by 1 rpm from the last upper limit value. As in the case where a state where the execution condition is established is shifted to a state where the execution condition is not established due to an increase in the coolant temperature or the like, when the low µ road control is not executed due to an event that is not related to the driver's intention, the driver receives the sense of discomfort if the upper limit value of the target idle speed of the internal combustion engine 15 is rapidly increased and the target idle speed is thereby rapidly increased. Accordingly, in this step 220, the upper limit value of the target idle speed is gradually increased. Furthermore, in this case, an increase in the upper limit value of the target idle speed of the internal combustion engine 15 to the conceivable maximum value of the speed of the internal combustion engine 15 is allowed.

The description has been made so far on the basis of the above embodiment. However, the invention is not limited to the above embodiment, and various modifications can be made thereto as long as they do not depart from the purpose of the invention.

For example, the vehicle 10 may be a different type from the FR vehicle and may be an FF vehicle or the like, for example. The internal combustion engine 15 may be changed to an internal combustion engine of a direct injection type, or the internal combustion engine 15 may be changed to a diesel engine. In addition, the invention may be applied to a hybrid vehicle that is equipped with an internal combustion engine and an electric motor.

Furthermore, in the cases where an occupant switches a low µ road switch (not shown) that is provided in the vicinity of a driver seat to an ON state and a braking operation is performed in a state where the vehicle is switched to a "low µ road travel mode", the ECU 30 may determine that the "low µ road control condition" is established and execute the low µ road control. In a case of this modified example, when the vehicle is in a "normal travel mode" due to switching of the low µ road switch to an OFF state, or when the braking operation is not performed, the ECU 30 determines that the "low µ road control condition" is canceled and executes the normal control.

The invention can be applied to a vehicle in which the coupling device generates the creep force. Accordingly, the invention can also be applied to a vehicle that uses a dual clutch transmission as the coupling device, for example. Furthermore, the invention can be applied to a semiautomatic vehicle that can generate the creep force.

## Claims

1. A control apparatus for a vehicle, the vehicle (10) including an internal combustion engine (15), a drive wheel (12), a non-drive wheel (11), a stepped automatic transmission (17), a coupling device (16), and a braking device (20),
the stepped automatic transmission (17) being configured to transmit power generated by the internal combustion engine (15) to the drive wheel (12),
the coupling device (16) being interposed between the internal combustion engine (15) and the stepped automatic transmission (17), the coupling device (16) being configured to transmit the power generated by the internal combustion engine (15) to the stepped automatic transmission (17) such that the vehicle (10) makes a creep travel,
the braking device (20) being configured to apply a braking force to the drive wheel (12) and the non-drive wheel (11),
the control apparatus comprising
an electronic control unit (30) configured to:
control the internal combustion engine (15) and the stepped automatic transmission (17);
execute a target idle speed control for controlling the internal combustion engine (15) such that an engine speed matches a target idle speed when an operation state of the internal combustion engine (15) is an idle operation state;
set an upper limit value of the target idle speed when a specified low µ road control condition is established while the braking device (20) acts on the vehicle (10), such that the upper limit value when the stepped automatic transmission (17) is in first gear is smaller than the upper limit value when the stepped automatic transmission (17) is in a second gear ; and
set a change amount per unit time of the upper limit value such that the change amount per unit time when the stepped automatic transmission (17) shifts from first gear to second gear is smaller than the change amount per unit time when the stepped automatic transmission (17) shifts from second gear to first gear.

2. The control apparatus according to claim 1 wherein
the electronic control unit (30) is configured to execute second gear holding control for shifting the stepped automatic transmission (17) to second gear and holding in second gear when the low µ road control condition is established during braking of the vehicle (10) by the braking device (20) when the stepped automatic transmission (17) is in first gear and a specified second gear holding condition is established.

3. The control apparatus according to claim 1 or 2 wherein
the electronic control unit (30) is configured to execute N control when the vehicle (10) is stopped, the N control is a control for shifting the stepped automatic transmission (17) to neutral where power cannot be transmitted, and
the electronic control unit (30) is configured to set the upper limit value of the target idle speed when executing the N control such that the upper limit value when the stepped automatic transmission (17) is in a state where power cannot be transmitted is higher than the upper limit value when the stepped automatic transmission (17) is in a state as to be able to transmit the power.

4. The control apparatus according to claim 1 or 2 wherein
the electronic control unit (30) is configured to execute SS control, the SS control is a control for stopping an operation of the internal combustion engine (15) when a speed of the vehicle (10) becomes at most equal to a specified speed, and
the electronic control unit (30) is configured to shift the stepped automatic transmission (17) to first gear when the SS control is executed.

5. A control method for a vehicle, the vehicle (10) including an internal combustion engine (15), a drive wheel (12), a non-drive wheel (11), a stepped automatic transmission (17), a coupling device (16), and a braking device (20),
the stepped automatic transmission (17) being configured to transmit power generated by the internal combustion engine (15) to the drive wheel (12),
the coupling device (16) being interposed between the internal combustion engine (15) and the stepped automatic transmission (17), the coupling device (16) being configured to transmit the power generated by the internal combustion engine (15) to the stepped automatic transmission (17) such that the vehicle (10) makes a creep travel,
the braking device (20) being configured to apply a braking force to the drive wheel (12) and the non-drive wheel (11),
the control method comprising:
controlling the internal combustion engine (15) and the stepped automatic transmission (17);
executing a target idle speed control for controlling the internal combustion engine (15) such that an engine speed matches a target idle speed when an operation state of the internal combustion engine (15) is an idle operation state;
setting an upper limit value of the target idle speed when a specified low µ road control condition is established while the braking device (20) acts on the vehicle (10), such that the upper limit value when the stepped automatic transmission (17) is in first gear is smaller than the upper limit value when the stepped automatic transmission (17) is in second gear; and
setteing a change amount per unit time of the upper limit value such that the change amount per unit time when the stepped automatic transmission (17) shifts from first gear to second gear is smaller than the change amount per unit time when the stepped automatic transmission (17) shifts from second gear to first gear.

## Patentansprüche

1. Steuerungsapparat für ein Fahrzeug, wobei das Fahrzeug (10) einen Verbrennungsmotor (15), ein Antriebsrad (12), ein Nichtantriebsrad (11), ein gestuftes Automatikgetriebe (17), eine Kopplungsvorrichtung (16) und eine Bremsvorrichtung (20) enthält,
wobei das gestufte Automatikgetriebe (17) konfiguriert ist, um eine Leistung, die durch den Verbrennungsmotor (15) erzeugt wird, an das Antriebsrad (12) zu übertragen,
wobei die Kopplungsvorrichtung (16) zwischen dem Verbrennungsmotor (15) und dem gestuften Automatikgetriebe (17) zwischengeschaltet ist, wobei die Kopplungsvorrichtung (16) konfiguriert ist, um die Leistung, die durch den Verbrennungsmotor (15) erzeugt wird, an das gestufte Automatikgetriebe (17) derart zu übertragen, dass das Fahrzeug (10) eine Kriechfortbewegung macht,
wobei die Bremsvorrichtung (20) konfiguriert ist, um eine Bremskraft auf das Antriebsrad (12) und das Nichtantriebsrad (11) auszuüben,
wobei der Steuerungsapparat eine elektronische Steuerungseinheit (30) aufweist, die konfiguriert ist, um:
den Verbrennungsmotor (15) und das gestufte Automatikgetriebe (17) zu steuern,
eine Sollleerlaufgeschwindigkeitssteuerung für ein Steuern des Verbrennungsmotors (15) derart auszuführen, dass eine Motorgeschwindigkeit zu einer Sollleerlaufgeschwindigkeit passt, wenn ein Betriebszustand des Verbrennungsmotors (15) ein Leerlaufbetriebszustand ist,
einen Obergrenzwert der Sollleerlaufgeschwindigkeit festzusetzen, wenn ein spezifizierter Niedrige-µ-Straße-Steuerungszustand festgelegt wird, während die Bremsvorrichtung (20) auf das Fahrzeug (10) wirkt, und zwar derart, dass der Obergrenzwert, wenn das gestufte Automatikgetriebe (17) in einem ersten Gang ist, kleiner als der Obergrenzwert, wenn das gestufte Automatikgetriebe (17) in einem zweiten Gang ist, ist, und
eine Änderungsgröße pro Einheit Zeit von dem Obergrenzwert derart festzusetzen, dass die Änderungsgröße pro Einheit Zeit, wenn das gestufte Automatikgetriebe (17) von einem ersten Gang auf einen zweiten Gang schaltet, kleiner als die Änderungsgröße pro Einheit Zeit, wenn das gestufte Automatikgetriebe (17) von einem zweiten Gang auf einen ersten Gang schaltet, ist.

2. Steuerungsapparat gemäß Anspruch 1, wobei
die elektronische Steuerungseinheit (30) konfiguriert ist, um eine Zweiter-Gang-Haltesteuerung für ein Schalten des gestuften Automatikgetriebes (17) auf einen zweiten Gang und ein Halten in einem zweiten Gang auszuführen, wenn der Niedrige-µ-Straße-Steuerungszustand während einem Bremsen des Fahrzeugs (10) durch die Bremsvorrichtung (20) festgelegt wird, und zwar wenn das gestufte Automatikgetriebe (17) in einem ersten Gang ist und ein spezifizierter Zweiter-Gang-Haltezustand festgelegt wird.

3. Steuerungsapparat gemäß Anspruch 1 oder 2, wobei
die elektronische Steuerungseinheit (30) konfiguriert ist, um ein N-Steuerung auszuführen, wenn das Fahrzeug (10) gestoppt wird, wobei die N-Steuerung eine Steuerung für ein Schalten des gestuften Automatikgetriebes (17) auf neutral, wo keine Leistung übertragen werden kann, ist, und
die elektronische Steuerungseinheit (30) konfiguriert ist, um den Obergrenzwert der Sollleerlaufgeschwindigkeit festzusetzen, wenn die N-Steuerung ausgeführt wird, und zwar derart, dass der Obergrenzwert, wenn das gestufte Automatikgetriebe (17) in einem Zustand ist, in dem eine Leistung nicht übertragen werden kann, höher als der Obergrenzwert, wenn das gestufte Automatikgetriebe (17) in einem Zustand ist, um in der Lage zu sein, die Leistung zu übertragen, ist.

4. Steuerungsapparat gemäß Anspruch 1 oder 2, wobei
die elektronische Steuerungseinheit (30) konfiguriert ist, um eine SS-Steuerung auszuführen, wobei die SS-Steuerung eine Steuerung für ein Stoppen eines Betriebs des Verbrennungsmotors (15) ist, wenn eine Geschwindigkeit des Fahrzeugs (10) höchstens eine spezifizierte Geschwindigkeit ist, und
die elektronische Steuerungseinheit (30) konfiguriert ist, um das gestufte Automatikgetriebe (17) auf einen ersten Gang zu schalten, wenn die SS-Steuerung ausgeführt wird.

5. Steuerungsverfahren für ein Fahrzeug, wobei das Fahrzeug (10) einen Verbrennungsmotor (15), ein Antriebsrad (12), ein Nichtantriebsrad (11), ein gestuftes Automatikgetriebe (17), eine Kopplungsvorrichtung (16) und eine Bremsvorrichtung (20) enthält,
wobei das gestufte Automatikgetriebe (17) konfiguriert ist, um eine Leistung, die durch den Verbrennungsmotor (15) erzeugt wird, an das Antriebsrad (12) zu übertragen,
wobei die Kopplungsvorrichtung (16) zwischen dem Verbrennungsmotor (15) und dem gestuften Automatikgetriebe (17) zwischengeschaltet ist, wobei die Kopplungsvorrichtung (16) konfiguriert ist, um die Leistung, die durch den Verbrennungsmotor (15) erzeugt wird, an das gestufte Automatikgetriebe (17) derart zu übertragen, dass das Fahrzeug (10) eine Kriechfortbewegung macht,
wobei die Bremsvorrichtung (20) konfiguriert ist, um eine Bremskraft auf das Antriebsrad (12) und das Nichtantriebsrad (11) auszuüben,
wobei das Steuerungsverfahren aufweist:
Steuern des Verbrennungsmotors (15) und des gestuften Automatikgetriebes (17),
Ausführen einer Sollleerlaufgeschwindigkeitssteuerung für ein Steuern des Verbrennungsmotors (15), und zwar derart, dass eine Motorgeschwindigkeit zu einer Sollleerlaufgeschwindigkeit passt, wenn ein Betriebszustand des Verbrennungsmotors (15) ein Leerlaufbetriebszustand ist,
Festsetzen eines Obergrenzwerts der Sollleerlaufgeschwindigkeit, wenn ein spezifizierter Niedrige-µ-Straße-Steuerungszustand festgelegt wird, während die Bremsvorrichtung (20) auf das Fahrzeug (10) wirkt, und zwar derart, dass der Obergrenzwert, wenn das gestufte Automatikgetriebe (17) in einem ersten Gang ist, kleiner als der Obergrenzwert, wenn das gestufte Automatikgetriebe (17) in einem zweiten Gang ist, ist, und
Festsetzen einer Änderungsgröße pro Einheit Zeit von dem Obergrenzwert, und zwar derart, dass die Änderungsgröße pro Einheit Zeit, wenn das gestufte Automatikgetriebe (17) von einem ersten Gang auf einen zweiten Gang schaltet, kleiner als die Änderungsgröße pro Einheit Zeit, wenn das gestufte Automatikgetriebe (17) von einem zweiten Gang auf einen ersten Gang schaltet, ist.

## Revendications

1. Appareil de contrôle pour un véhicule, le véhicule (10) comprenant un moteur à combustion interne (15), une roue motrice (12), une roue non motrice (11), une transmission automatique étagée (17), un dispositif de couplage (16) et un dispositif de freinage (20),
la transmission automatique étagée (17) étant configurée pour transmettre la puissance générée par le moteur à combustion interne (15) à la roue motrice (12),
le dispositif de couplage (16) étant intercalé entre le moteur à combustion interne (15) et la transmission automatique étagée (17), le dispositif de couplage (16) étant configuré pour transmettre la puissance générée par le moteur à combustion interne (15) à la transmission automatique étagée (17) de sorte que le véhicule (10) réalise un déplacement par glissement,
le dispositif de freinage (20) étant configuré pour appliquer une force de freinage sur la roue motrice (12), et la roue non motrice (11),
l'appareil de contrôle comprenant :
une unité de contrôle électronique (30) configurée pour :
contrôler le moteur à combustion interne (15) et la transmission automatique étagée (17) ;
exécuter un contrôle de vitesse de ralenti cible pour contrôler le moteur à combustion interne (15) de sorte qu'une vitesse de moteur correspond à une vitesse de ralenti cible lorsqu'un état de fonctionnement du moteur à combustion interne (15) est un état de fonctionnement au ralenti ;
déterminer une valeur de limite supérieure de la vitesse de ralenti cible lorsqu'une condition de contrôle de route µ faible spécifiée est établie alors que le dispositif de freinage (20) agit sur le véhicule (10), de sorte que la valeur de limite supérieure lorsque la transmission automatique étagée (17) est dans le premier rapport, est inférieure à la valeur de limite supérieure lorsque la transmission automatique étagée (17) est dans un second rapport ; et
déterminer une quantité de changement par unité de temps de la valeur de limite supérieure de sorte que la quantité de changement par unité de temps lorsque la transmission automatique étagée (17) passe du premier rapport au second rapport, est inférieure à la quantité de changement par unité de temps lorsque la transmission automatique étagée (17) passe du second rapport au premier rapport.

2. Appareil de contrôle selon la revendication 1, dans lequel :
l'unité de contrôle électronique (30) est configurée pour exécuter un second contrôle de maintien de rapport pour faire passer la transmission automatique étagée (17) au second rapport et la maintenir au second rapport lorsque la condition de contrôle de route µ faible est établie pendant le freinage du véhicule (10) par le dispositif de freinage (20) lorsque la transmission automatique étagée (17) est dans le premier rapport et une seconde condition de maintien de rapport spécifiée est établie.

3. Appareil de contrôle selon la revendication 1 ou 2, dans lequel :
l'unité de contrôle électronique (30) est configurée pour exécuter le contrôle N lorsque le véhicule (10) est arrêté, le contrôle N est un contrôle pour faire passer la transmission automatique étagée (17) au point mort lorsque la puissance ne peut pas être transmise, et
l'unité de contrôle électronique (30) est configurée pour déterminer la valeur de limite supérieure de la vitesse de ralenti cible lors de l'exécution du contrôle N de sorte que la valeur de limite supérieure lorsque la transmission automatique étagée (17) est dans un état dans lequel la puissance ne peut pas être transmise, est supérieure à la valeur de limite supérieur lorsque la transmission automatique étagée (17) est dans un état afin de pouvoir transmettre la puissance.

4. Appareil de contrôle selon la revendication 1 ou 2, dans lequel :
l'unité de contrôle électronique (30) est configurée pour exécuter le contrôle SS, le contrôle SS est un contrôle pour arrêter un fonctionnement du moteur à combustion interne (15) lorsqu'une vitesse du véhicule (10) est au moins égale à une vitesse spécifiée, et
l'unité de contrôle électronique (30) est configurée pour faire passer la transmission automatique étagée (17) dans le premier rapport lorsque le contrôle SS est exécuté.

5. Procédé de contrôle pour un véhicule, le véhicule (10) comprenant un moteur à combustion interne (15), une roue motrice (12), une roue non motrice (11), une transmission automatique étagée (17), un dispositif de couplage (16) et un dispositif de freinage (20),
la transmission automatique étagée (17) étant configurée pour transmettre la puissance générée par le moteur à combustion interne (15) à la roue motrice (12),
le dispositif de couplage (16) étant intercalé entre le moteur à combustion interne (15) et la transmission automatique étagée (17), le dispositif de couplage (16) étant configuré pour transmettre la puissance générée par le moteur à combustion interne (15) à la transmission automatique étagée (17) de sorte que le véhicule (10) réalise un déplacement par glissement,
le dispositif de freinage (20) étant configuré pour appliquer une force de freinage sur la roue motrice (12) et la roue non motrice (11),
le procédé de commande comprenant les étapes suivantes :
contrôle le moteur à combustion interne (15) et la transmission automatique étagée (17) ;
exécuter un contrôle de vitesse de ralenti cible pour contrôler le moteur à combustion interne (15), de sorte qu'une vitesse de moteur correspond à une vitesse de ralenti cible lorsqu'un état de fonctionnement du moteur à combustion interne (15) est un état de fonctionnement au ralenti ;
déterminer une valeur de limite supérieure de la vitesse de ralenti cible lorsqu'une condition de contrôle de route µ faible spécifiée est établie alors que le dispositif de freinage (20) agit sur le véhicule (10), de sorte que la valeur de limite supérieure, lorsque la transmission automatique étagée (17) est dans un premier rapport, est inférieure à la valeur de limite supérieure lorsque la transmission automatique étagée (17) est dans un second rapport ; et
déterminer une quantité de changement par unité de temps de la valeur de limite supérieure de sorte que la quantité de changement par unité de temps, lorsque la transmission automatique étagée (17) passe du premier rapport au second rapport, est inférieure à la quantité de changement par unité de temps lorsque la transmission automatique étagée (17) passe du second rapport au premier rapport.
